# FASCICULE DE BREVET EUROPEEN

(11) **EP 1 123 205 B1**
(45) Date de publication et mention de la délivrance du brevet: **22.06.2011**
(21) Numéro de dépôt: 99948818.2
(22) Date de dépôt: 17.09.1999
(51) Int. Cl.: B32B 27/08, B32B 27/20, F16L 11/127

(54) **CORPS CREUX MULTICOUCHE EN MATIERE THERMOPLASTIQUE ET PROCEDE POUR SA FABRICATION**
MEHRSCHICHTIGER HOHLKÖRPER AUS THERMOPLASTISCHEM KUNSTSTOFF UND VERFAHREN ZUR HERSTELLUNG
THERMOPLASTIC MULTILAYER HOLLOW BODY AND METHOD FOR MAKING SAME

(30) Priorité: 08.10.1998 BE 9800727
(43) Date de publication de la demande: 16.08.2001
(73) Titulaire: Inergy Automotive Systems Research (SA), 1120 Bruxelles (BE)
(72) Inventeur: DUPONT, Serge, B-1800 Vilvoorde (BE); VAN SCHAFTINGEN, Jules-Joseph, B-1300 Wavre (BE)
(74) Mandataire: Decamps, Alain René François
(86) Numéro de dépôt international: PCT/EP1999/007005
(87) Numéro de publication internationale: WO 2000/021750

(56) Documents cités:
- EP-A- 0 470 606
- EP-A- 0 626 256
- EP-A- 0 731 307
- EP-A- 0 742 096
- EP-A- 0 754 897
- WO-A-91/02027
- WO-A-98/29245

## Description

La présente invention concerne un corps creux multicouche en matière thermoplastique.

Les corps creux multicouches en matière thermoplastique ont été développés pour répondre à des besoins d'utilisation qui exigent des propriétés ne pouvant être conférées par une seule matière thermoplastique. On a notamment fait appel à cette technique lorsqu'il s'est agit de fabriquer des corps creux en matière thermoplastique qui présentent à la fois une rigidité élevée à température ordinaire et une bonne imperméabilité vis-à-vis de certains liquides qu'ils sont destinés à contenir. Dans ce cas, la fonction d'imperméabilisation est généralement conférée par une couche interne de faible épaisseur et de faible résistance mécanique qui est réalisée en un matériau se comportant comme une barrière vis-à-vis du liquide et des vapeurs de ce liquide contenus dans le corps creux.

Dans certaines situations, lorsque, par exemple, le corps creux est en contact avec un liquide non conducteur de l'électricité et qu'il y a frottement de ce liquide sur une surface de ce corps creux, de l'électricité statique peut se générer à cette surface, par suite de la faible conductivité électrique que présentent habituellement les matières plastiques courantes. Lorsque les potentiels électrostatiques générés sont suffisamment élevés, des étincelles peuvent survenir, en particulier dans des conditions atmosphériques sèches. Si le liquide en contact avec la surface chargée du corps creux est inflammable, on court le risque d'explosion et de destruction du corps creux et de son environnement.

Des solutions ont par conséquent été développées pour contrer l'accumulation d'électricité statique à la surface des corps creux susceptibles d'entrer en contact avec des fluides inflammables peu conducteurs. Parmi celles-ci, on rencontre des dispositifs de mise à la terre des corps creux et de leurs supports au moyen de pièces métalliques bonnes conductrices ou encore l'incorporation à la matière plastique des corps creux d'additifs afin de les rendre bons conducteurs.

Dans certains cas, la présence de ces additifs à la surface du corps creux implique toutefois que les traitements d'imperméabilisation traditionnels effectués par mise en contact de fluor gazeux avec la surface à traiter ne peuvent plus s'effectuer correctement, notamment lorsque le traitement de fluoration est effectué en cours de soufflage lors de la fabrication du corps creux.

Par ailleurs, l'incorporation d'additifs de conductibilité dans la totalité de la masse des parois d'un corps creux altère défavorablement les propriétés mécaniques du produit fini et en grève fréquemment le coût dans une mesure qui n'est pas économiquement acceptable.

On a donc cherché à fabriquer des corps creux présentant une structure multicouche dans laquelle la matière thermoplastique conductrice se trouve en surface et l'imperméabilisation est assurée par la présence d'une couche interne comprenant un matériau imperméable (matériau "barrière").

La demande internationale de brevet WO 95/05940 décrit un matériau thermoplastique composite formé de 5 couches comprenant une âme de copolymère éthylène-alcool vinylique entourée de part et d'autre par une couche d'adhésif suivie d'une couche de base qui peut être une polyoléfine, par exemple du polyéthylène haute densité. Un matériau conducteur, tel qu'une poudre métallique ou de carbone peut être incorporée dans une des couches de base ou appliqué sur celle-ci sous forme de couche supplémentaire à la surface extérieure.

Les structures multicouches connues comportant une surface conductrice et une couche barrière interne nécessitent cependant des couches de base comportant un matériau noble et qui soient relativement épaisses pour rigidifier l'ensemble et atteindre des propriétés mécaniques acceptables. Lorsqu'elles doivent résister à des sollicitations compatibles avec une utilisation intensive, par exemple lorsqu'elles sont associées à des réservoirs à carburant pour véhicules automobiles, il en résulte la nécessité de mettre en oeuvre une quantité élevée de matière noble et par conséquent un prix élevé pour la matière première et pour la structure multicouche finie.

L'invention a pour objet un corps creux multicouche conducteur pouvant résister à des sollicitations mécaniques importantes, hautement imperméable aux produits qu'il est destiné à contenir et d'un coût raisonnable.

A cet effet, l'invention concerne un tubulure ou embout de remplissage d'un réservoir à carburant multicouche en matière thermoplastique qui est obtenu par soufflage et qui comprend une couche intérieure comprenant un compound conducteur à base de polymère vierge sélectionné parmi les polyoléfines et les polyamides, une couche extérieure comprenant un polymère vierge sélectionné parmi les polyoléfines et les polyamides, au moins une couche barrière et au moins un adhésif, selon lequel il comprend aussi au moins une couche comprenant de la matière plastique recyclée.

Dans l'invention, par corps creux on désigne , une tubulure ou embout de remplissage.

Selon l'invention, le corps creux est multicouche en matière thermoplastique, c'est-à-dire, formé d'un empilage de plusieurs couches comprenant de la matière thermoplastique.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

La matière thermoplastique d'une couche particulière peut être unique dans la structure multicouche du corps creux. Elle peut aussi se retrouver dans au moins deux couches distinctes de cette structure. Lorsqu'elle est unique ou qu'elle se retrouve, au contraire, dans plus d'une couche de la structure, une matière thermoplastique particulière peut se trouver seule ou en présence d'autres composés choisis parmi les additifs de nature diverse destinés à modifier les propriétés intrinsèques de la matière thermoplastique et bien connus de l'homme du métier. Des exemples de tels additifs sont, non limitativement : des matières de charge, des stabilisants, des plastifiants, des lubrifiants, des écrans aux rayons UV,... On peut encore associer au moins deux matières thermoplastiques différentes au sein d'une même couche de la structure. Dans ce cas, la couche peut aussi, éventuellement, contenir au moins un des additifs cités *supra.*

Selon l'invention, le corps creux comprend une couche intérieure comprenant un compound conducteur à base de polymère sélectionné parmi les polyoléfines et les polyamides.

Par couche intérieure, on entend la couche la plus externe du corps creux se trouvant du côté d'une partie concave de ce corps. La couche intérieure est celle qui est en contact direct avec le carburant

Le compound conducteur est un mélange comprenant au moins une matière thermoplastique sélectionnée parmi les polyoléfines et les polyamides et au moins un additif qui confère au mélange de bonnes propriétés antistatiques. L'objectif visé est de conférer à la couche intérieure une faible résistivité électrique de surface. On considère généralement qu'une résistivité de surface est faible lorsqu'elle est au plus de 10⁶ Ohm/carré, telle que mesurée selon la procédure décrite à la norme CEI/IEC 93: 1980 (2e édition). En pratique, les couches thermoplastiques conductrices qui comprennent un compound conducteur et dont la résistivité de surface est au plus de 0,5.10⁶ Ohm/carré sont préférées. D'excellents résultats ont été obtenus avec des couches conductrices de résistivité de surface d'au moins 0,1.10⁶ Ohm/carré et d'au plus 0,5.10⁶ Ohm/carré.

De tels compounds conducteurs comprennent une base de polyoléfine ou de polyamide à laquelle on ajoute une certaine quantité d'additif conducteur de l'électricité. Comme additifs conducteurs, on peut utiliser, de manière non limitative un ou plusieurs des additifs suivants : le noir de carbone, la poudre ou les fibres de carbone et les polymères conducteurs. Par polymère conducteur, on désigne des polymères intrinsèquement conducteurs de l'électricité, comme, par exemple, ceux appartenant à la classe des polythiophènes, des polypyrroles et des polyindoles. De tels polymères conducteurs sont décrits notamment dans les brevets européens 0240063, 0323656, 0375005, 0408105, 0525856, 0416672, 0413382, 0469667 et dans le brevet des Etats-Unis 5290891.

Les additifs à base de carbone élémentaire sont préférés. Le noir de carbone est l'additif conducteur le plus souvent préféré.

La quantité d'additif conducteur mise en oeuvre est d'au moins 5 % en poids par rapport au compound conducteur. Il est généralement indiqué de ne pas dépasser 25 % en poids d'additif conducteur dans le compound et, de préférence, de ne pas dépasser 20 %. Il est particulièrement avantageux de ne pas dépasser 15 % en poids de cet additif conducteur dans le compound.

Dans le cas particulier des additifs polymères conducteurs, la couche intérieure peut être constituée d'un mélange de ce polymère avec une polyoléfine ou un polyamide. Elle peut aussi être constituée en totalité de ce polymère conducteur, sans comprendre de polyoléfine ni de polyamide.

Par polymère vierge, on entend désigner un polymère dans lequel on n'a mélangé aucune matière plastique recyclée, mais qui peut éventuellement comprendre un ou plusieurs additifs tels que définis plus haut.

De préférence, le compound conducteur est exempt de toute matière plastique recyclée.

Par polyoléfine, on entend désigner tout homopolymère d'oléfine, tout copolymère comprenant au moins deux oléfines différentes et tout copolymère comprenant au moins 50 % en poids d'unités dérivées d'oléfines. Plusieurs polyoléfines peuvent également être utilisées en mélange.

Comme exemple de polyoléfines qui peuvent être utilisées, on peut citer, de manière non limitative : le polyéthylène, les copolymères éthylène-butène et les copolymères éthylène-hexène. De manière préférée, la polyoléfine est un polyéthylène. Le polyéthylène haute densité a donné d'excellents résultats, en particulier pour ce qui concerne des contenus hydrocarbures liquides.

Par polyamide, on désigne tout homopolymère d'unité amide, tout copolymère comprenant au moins deux unités amides différentes et tout copolymère comprenant au moins 50 % en poids d'unités dérivées d'un amide. Les unités amides de cette définition peuvent indifféremment être obtenues par l'ouverture du cycle d'une polyamide cyclique ou par polycondensation d'un diacide carboxylique avec une diamine. Plusieurs polyamides peuvent également être utilisés en mélange.

Comme exemple de polyamides qui peuvent être utilisés, on peut citer, de manière non limitative : PA6, PA1 et PA12. Le PA6 est généralement préféré.

De manière symétrique à la définition de la couche intérieure, on entend par couche extérieure, la couche la plus externe de la structure se trouvant du côté d'une partie convexe du corps creux.

La couche extérieure comprend aussi un polymère vierge sélectionné parmi les polyoléfines et les polyamides. Les polyamides ou les polyoléfines de la couche extérieure sont de même nature que ceux définis plus haut pour la couche intérieure. Dans un corps creux particulier, la couche intérieure et la couche extérieure peuvent comprendre le même polymère vierge, ou un polymère différent.

Le corps creux conforme à l'invention comprend aussi une couche barrière. Par couche barrière, on entend désigner une couche imperméable aux liquides et aux gaz. La couche barrière est le plus souvent une couche interne de la structure multicouche qui comprend une résine barrière. Toute résine barrière connue peut être utilisée, pour autant qu'elle soit efficace vis-à-vis des fluides en contact avec le corps creux, en particulier des hydrocarbures, et qu'elle soit compatible avec la technique de moulage qui est utilisée pour mettre en forme ce corps creux. Parmi les résines utilisables, on peut citer, de manière non limitative, les polyamides ou copolyamides ou les copolymères statistiques d'éthylène et d'alcool vinylique. Un mélange de différentes résines barrières peut aussi être utilisé. De très bons résultats ont été obtenus avec une résine barrière de copolymère statistique d'éthylène et d'alcool vinylique.

De manière préférée, la couche barrière ne comprend pas d'additif et est essentiellement constituée de résine barrière.

Selon l'invention, le corps creux comprend aussi au moins un adhésif. Cet adhésif a pour fonction de permettre l'adhésion de deux couches adjacentes qui ne présentent par elles-mêmes aucune tendance à se solidariser et d'augmenter ainsi fortement la résistance au délaminage. Cet adhésif peut se trouver dans une couche supplémentaire distincte de matière thermoplastique intercalée entre les deux couches à solidariser. Dans certains cas, il constitue lui-même la matière thermoplastique de la couche adhésive. L'adhésif peut aussi se trouver mélangé à la matière thermoplastique d'une des couches à solidariser, voire des deux.

La nature de l'adhésif présent dans le corps creux conforme à l'invention peut varier largement d'un corps creux à l'autre, pour autant que cet adhésif reste compatible avec les autres constituants du corps creux avec lesquels il est mis en contact et qu'il ne dégrade pas significativement les propriétés mécaniques de l'ensemble de la structure multicouche.

Comme exemple d'adhésif, on peut citer ceux décrits dans la demande de brevet français 98.03571.

L'adhésif le plus employé est généralement un adhésif polymère se présentant sous la forme d'une polyoléfine fonctionnalisée. Par polyoléfine fonctionnalisée, on entend désigner toute polyoléfine comprenant, outre des unités dérivées d'oléfines, des unités monomériques fonctionnelles. Celles-ci peuvent être incorporées soit dans la chaîne principale de la polyoléfine, soit dans ses chaînes latérales. Elles peuvent également être incorporées directement dans le squelette de ces chaînes principales et latérales, par exemple par copolymérisation d'un ou de plusieurs monomères fonctionnels avec le ou les monomères oléfiniques ou encore résulter du greffage d'un ou des plusieurs monomères fonctionnels sur lesdites chaînes, ultérieurement à la fabrication de la polyoléfine. Plusieurs polyoléfines fonctionnalisées peuvent aussi être utilisées en mélange.

On choisit les unités monomériques fonctionnelles de la polyoléfine fonctionnalisée parmi les acides carboxyliques, les diacides carboxyliques et les anhydrides correspondants à ces diacides. Ces unités monomériques proviennent généralement de la copolymérisation ou du greffage d'au moins un monomère insaturé possédant les mêmes fonctions. Des exemples de monomères utilisables sont, non limitativement, l'acide acrylique, l'acide méthacrylique, l'acide maléique, l'acide fumarique, l'acide itaconique, l'anhydride maléique, l'anhydride fumarique et l'anhydride itaconique. De préférence, les unités monomériques fonctionnelles proviennent de la copolymérisation ou du greffage d'anhydride maléique.

Le corps creux multicouche selon l'invention doit comprendre aussi au moins une couche comprenant de la matière plastique recyclée.

Par matière plastique recyclée, on entend une matière plastique obtenue par broyage de chutes obtenues à différentes étapes de la fabrication d'un corps creux, en particulier le corps creux multicouche selon l'invention, ou par broyage de corps creux usagés en fin de vie.

Selon un mode de réalisation particulier du corps creux multicouche conforme à l'invention, la couche extérieure comprend un compound conducteur. La nature du compound conducteur présent dans la couche extérieure est semblable à celle décrite plus haut pour la couche intérieure. Le même compound conducteur peut être mis en oeuvre dans chacune des couches intérieure et extérieure. On peut aussi, au contraire, utiliser des compounds conducteurs de nature différente dans les couches intérieure et extérieure. Des mélanges de compounds différents peuvent aussi être utilisés dans la couche intérieure et/ou dans la couche extérieure.

Selon un autre mode de réalisation particulier avantageux du corps creux multicouche conforme à l'invention, les couches situées de part et d'autre d'une couche barrière comprennent au moins un adhésif.

Une variante à ce mode de réalisation est celle dans laquelle les couches qui comprennent de l'adhésif sont exemptes de toute matière plastique recyclée.

Une autre variante spécialement intéressante à ce mode de réalisation particulier est le corps creux multicouche où l'adhésif se trouve mélangé à au moins une des couches du corps creux, sans constituer une couche distincte. De préférence, l'adhésif est mélangé à une couche du corps creux différente de la couche barrière. De manière avantageuse, l'adhésif se trouve mélangé à au moins une couche adjacente à la couche barrière. De manière particulièrement avantageuse, l'adhésif est mélangé à deux couches situées de part et d'autre de la couche barrière, sans constituer des couches distinctes.

Dans un autre mode de réalisation du corps creux selon l'invention, au moins une couche comprenant de la matière plastique recyclée est située entre la couche barrière et la couche intérieure. Cette couche comprenant de la matière plastique recyclée peut être adjacente à la couche intérieure. Elle peut aussi, au contraire, être adjacente à la couche barrière ou à la couche comprenant un adhésif. Elle peut aussi, dans certaines structures, être adjacente à la fois à la couche intérieure et à la couche barrière ou à la couche comprenant un adhésif.

De préférence, cette couche comprenant de la matière recyclée comprend aussi au moins un adhésif.

De préférence, le corps creux selon l'invention est constitué de 4 couches disposées dans l'ordre suivant :
a) une couche intérieure comprenant un compound conducteur à base de polyoléfine vierge,
b) une couche comprenant de la matière plastique recyclée et au moins un adhésif,
c) une couche barrière vis-à-vis des hydrocarbures,
d) une couche extérieure à base de polyoléfine vierge comprenant au moins un adhésif.

Un autre mode de réalisation du corps creux selon l'invention est encore le corps creux dans lequel au moins une couche comprenant de la matière plastique recyclée est située entre la couche barrière et la couche extérieure. Parallèlement au mode de réalisation précédent, cette couche comprenant de la matière plastique recyclée peut être adjacente à la couche extérieure. Elle peut aussi, au contraire, être adjacente à la couche barrière ou à la couche comprenant un adhésif. Dans certaines structures, elle peut aussi être adjacente à la fois à la couche extérieure et à la couche barrière ou à la couche comprenant un adhésif.

De préférence, cette couche comprenant de la matière plastique recyclée comprend aussi au moins un adhésif.

Une variante préférée du corps creux selon l'invention, compatible avec différents modes de réalisation détaillés ci-dessus comprend une couche à base de polyoléfine non conductrice contiguë à une couche intérieure comprenant un compound conducteur à base de polyoléfine vierge. Dans cette variante, la résistance à l'impact de la couche intérieure conductrice est avantageusement améliorée.

Un corps creux selon l'invention qui a donné de bons résultats est constitué de 7 couches disposées dans l'ordre suivant :
a) une couche intérieure comprenant un compound conducteur à base de polyoléfine vierge,
b) une couche à base de polyoléfine vierge,
c) une couche comprenant au moins un adhésif,
d) une couche barrière vis-à-vis des hydrocarbures,
e) une couche comprenant au moins un adhésif,
f) une couche comprenant de la matière plastique recyclée,
g) une couche extérieure à base de polyoléfine vierge.

Le corps creux selon l'invention est bien adapté comme tubulure de remplissage des réservoirs à carburant en matière thermoplastique. En particulier, il peut constituer avantageusement la tubulure de remplissage des réservoirs à carburant en matière thermoplastique qui équipent les véhicules automobiles.

Par extension, le corps creux selon l'invention peut aussi comprendre l'embout de remplissage d'un réservoir à carburant.

L'embout de remplissage est la partie solidaire de l'extrémité extérieure de la tubulure de remplissage qui a pour fonction de guider le pistolet qui équipe les tuyaux souples des pompes de distribution de carburant des stations-service. Il peut constituer une pièce séparée de la tubulure de remplissage proprement dite, ou au contraire faire partie intégrante de l'extrémité de celle-ci.

Le corps creux conducteur décrit *supra* résiste à des sollicitations mécaniques importantes tout en présentant une imperméabilité élevée aux produits qu'il est destiné à contenir. Il reste par ailleurs d'un coût raisonnable.

Dès lors, l'invention concerne aussi un procédé pour fabriquer un corps creux conforme à une quelconque des revendications précédentes selon la technique de coextrusion-soufflage, comprenant une étape d'extrusion d'une paraison multicouche, une étape de préformage de la paraison et une étape de moulage de cette paraison, selon lequel on opère en semi-continu avec au moins un poste de moulage et on effectue les opérations suivantes :
a) dans l'étape d'extrusion, qui est continue, on forme un tube en matière thermoplastique multicouche que l'on pince et on sectionne de manière à former des paraisons que l'on dépose en continu sur une bande transporteuse;
b) dans l'étape de préformage, on accompagne le dépôt de chaque paraison sur la bande transporteuse d'une opération de préformage transversal au moyen d'un outil;
c) on déplace la paraison préformée dans un poste de moulage au-dessus d'une partie de moule ouvert et on y dépose la paraison;
d) on ferme le moule et on souffle la paraison;
e) on ouvre le moule et on éjecte le corps creux formé.

Les opérations b) à e) sont discontinues et mettent en oeuvre un ou plusieurs moules. Lorsque plus d'un moule est utilisé, il est alors possible de réaliser des durées d'extrusion des paraisons inférieures à celles de leur moulage.

Par préformage transversal, on entend désigner toute opération ou suite d'opérations destinée à modifier la géométrie de la paraison dans le sens perpendiculaire à celui de son extrusion entre le moment où elle est extrudée et le moment où elle est introduite dans un moule.

L'opération de préformage transversal de la paraison se fait au moyen d'un outil qui peut être de toute nature connue de l'homme du métier. Il peut s'agir, par exemple, de gabarits qui viennent pincer latéralement la paraison.

De manière avantageuse, au moins un outil de préformage transversal épouse, au moins en partie, le profil longitudinal de la bande transporteuse.

Une variante intéressante au procédé selon l'invention comporte un outil de préformage de la paraison qui est non plan. Avantageusement, le profil longitudinal de la bande transporteuse est non plan et l'outil de préformage épouse, au moins en partie, son profil longitudinal.

Les exemples qui suivent illustrent l'invention de manière non limitative. Les exemples 1R et 2R donnés à titre de référence et ne sont pas conformes à l'invention. Les autres exemples illustrent des corps creux conformes à l'invention.

Dans ces exemples, les abréviations suivantes sont employée
- PE : polyéthylène,
- PEHD : polyéthylène haute densité,
- PEBD : polyéthylène basse densité,
- AM : anhydride maléique,
- PegAM : polyéthylène greffé au moyen d'anhydride maléique,
- EVOH : copolymère statistique d'éthylène et d'alcool vinylique,
- essence de type M0 : « CEC legislative fuel RF08-A-85 » selon la dénomination de la firme HALTERMANN GmbH,
- essence de type TF1 : mélange de 90 % par volume d'essence de type M0 et de 10 % d'éthanol.

### Exemple 1R :

Des tubulures à 6 couches comprenant, de l'intérieur vers l'extérieur :
- une couche de compound de polyéthylène conducteur LNP® PDX-F98-385,
- une couche de PEHD vierge ELTEX® RSB 714 de SOLVAY,
- une couche d'adhésif constituée de PEBD greffé d'AM ADMER® GT5e,
- une couche barrière d'EVOH EVAL® EPF 101a,
- une couche d'adhésif constituée de PEBD greffé d'AM ADMER® GT5e,
- une couche de PEHD vierge ELTEX® RSB 714 ont été coextrudées à l'aide d'un bloc de coextrusion continue, puis mises en forme et soufflées dans un moule.

L'épaisseur moyenne des couches a été de 2,9 mm et les proportions en épaisseur sont les suivantes (de l'intérieur vers l'extérieur) : 15 %, 33 %, 1,5 %, 1,6 %, 1,9 % et 47 %. La résistivité électrique de surface de la tubulure déterminée entre deux pièces métalliques introduites à l'intérieur de la couche intérieure, à chacune de ses extrémités, a été mesurée entre 0,1 et 0,5 10⁶ Ohm/carré.

La couche d'EVOH est continue, de même que la couche de compound de PEHD conducteur intérieure, ce qui assure en même temps une faible perméabilité et une bonne conductibilité électrique.

La perméabilité aux essences de type M0 et M1 a été mesurée par détermination de la perte de poids à 40 °C et a fourni les résultats suivants : 10 mg/jour pour le carburant M0 et 60 mg/jour pour le carburant TF1. Exemple 2R :

Des tubulures à 4 couches comprenant, de l'intérieur vers l'extérieur :
- une couche comprenant un compound de polyéthylène conducteur LNP® PDX-F98-385,
- une couche de PEHD ELTEX® RSB 714 comprenant 3,5 % d'un adhésif de type PegAM qui comprend 1,7 % d'AM et de Melt Index valant 0,2 g/10 min (5.0 kg, 190°C),
- une couche barrière d'EVOH EVAL® EPF 101a,
- une couche de PEHD ELTEX® RSB 714 comprenant 3,5 % d'un adhésif de type PegAM qui comprend 1.7 % d'AM et de Melt Index valant 0,2 g/10 min
(5,0 kg, 190 °C)
ont été coextrudées à l'aide d'un bloc de coextrusion continue, puis mises en forme et soufflées dans un moule.

L'épaisseur moyenne des couches a été de 2,9 mm et les proportions en épaisseur sont les suivantes (de l'intérieur vers l'extérieur) : 15%, 33 %, 1,6 %, et 50,4%.

La résistivité électrique de surface de la tubulure déterminée entre deux pièces métalliques introduites à l'intérieur de la couche intérieure à chacune de ses extrémités a été mesurée entre 0,1 et 0,5 10⁶ Ohm/carré.

La couche d'EVOH est continue, de même que la couche de compound de PEHD conducteur intérieure, ce qui assure en même temps une faible perméabilité et une bonne conductibilité électrique.

La perméabilité aux essences de type M0 et TF1 a été mesurée à 40 °C et s'élève à 15 mg/jour pour l'essence M0 et à 100 mg/jour pour l'essence TF1.

### Exemple 3 :

Des tubulures à 6 couches comprenant, de l'intérieur vers l'extérieur :
- une couche de compound de polyéthylène conducteur LNP® PDX-F98-385,
- une couche à base de chutes de fabrication broyées,
- une couche d'adhésif constituée par du PEBD greffé d'AM ADMER® GT5e,
- une couche barrière d'EVOH EVAL® EPF 101a,
- une couche d'adhésif constituée par du PEBD greffé d'AM ADMER® GT5e,
- une couche de PEHD vierge ELTEX® RSB 714
   ont été coextrudées à l'aide d'un bloc de coextrusion continue, puis mises en forme et soufflées dans un moule.

L'épaisseur moyenne des couches a été de 2,9 mm et les proportions en épaisseur sont les suivantes (de l'intérieur vers l'extérieur) : 15 %, 33 %, 1,5 %, 1,6 %, 1,9 % et 47 %.

La résistivité électrique de surface de la tubulure déterminée entre deux pièces métalliques introduites à l'intérieur de la couche intérieure, à chacune de ses extrémités, a été mesurée entre 0,1 et 0,5 10⁶ Ohm/carré, c'est-à-dire une valeur semblable à celle obtenue à l'exemple 1R où la tubulure ne comportait pas de couche comprenant de la matière plastique recyclée.

La couche d'EVOH est continue, de même que la couche compound de PEHD conducteur intérieure, ce qui assure en même temps une faible perméabilité et une bonne conductibilité électrique, analogue à celle de la tubulure de l'exemple 1R.

## Revendications

1. Tubulure ou embout de remplissage d'un réservoir à carburant multicouche en matière thermoplastique qui est obtenu par soufflage et qui comprend une couche intérieure, qui est en contact direct avec le carburant, comprenant un compound conducteur à base de polymère vierge sélectionné parmi les polyoléfines et les polyamides, une couche extérieure comprenant un polymère vierge sélectionné parmi les polyoléfines et les polyamides, au moins une couche barrière, au moins un adhésif, et au moins une couche comprenant de la matière plastique recyclée, le compound conducteur comprenant un additif conducteur à raison d'au moins 5 % en poids par rapport au compound conducteur et la résistivité électrique de surface de la couche intérieure conductrice étant d'au plus 10⁶ Ohm/carré.

2. Tubulure ou embout selon la revendication précédente, **caractérisé en ce que** la couche extérieure comprend un compound conducteur.

3. Tubulure ou embout selon la revendication 1 ou 2, **caractérisé en ce que** les couches situées de part et d'autre d'une couche barrière comprennent au moins un adhésif.

4. Tubulure ou embout selon une quelconque des revendications précédentes, **caractérisé en ce qu'**au moins une couche comprenant de la matière plastique recyclée est située entre la couche barrière et la couche intérieure.

5. Tubulure ou embout selon une quelconque des revendications 1 à 3, **caractérisé en ce qu'**au moins une couche comprenant de la matière plastique recyclée est située entre la couche barrière et la couche extérieure.

6. Tubulure ou embout selon une quelconque des revendications 1 à 4, **caractérisé en ce qu'**il est constitué de 4 couches disposées dans l'ordre suivant :
a) une couche intérieure comprenant un compound conducteur à base de polyoléfine vierge,
b) une couche comprenant de la matière plastique recyclée et au moins un adhésif,
c) une couche barrière vis-à-vis des hydrocarbures,
d) une couche extérieure à base de polyoléfine vierge comprenant au moins un adhésif.

7. Tubulure ou embout selon une quelconque des revendications 1 à 5, **caractérisé en ce qu'**il comprend une couche à base de polyoléfine non conductrice contiguë à une couche intérieure comprenant un compound à base de polyoléfine conductrice.

8. Tubulure ou embout selon une quelconque des revendications 1 à 3, 5 ou 7, **caractérisé en ce qu'**il est constitué de 7 couches disposées dans l'ordre suivant :
a) une couche intérieure comprenant un compound conducteur à base de polyoléfine vierge,
b) une couche à base de polyoléfine vierge,
c) une couche comprenant au moins un adhésif,
d) une couche barrière vis-à-vis des hydrocarbures,
e) une couche comprenant au moins un adhésif,
f) une couche comprenant de la matière plastique recyclée,
g) une couche extérieure à base de polyoléfine vierge.

9. Tubulure ou embout selon une quelconque des revendications précédentes, **caractérisé en ce qu'**il constitue une tubulure de remplissage pour réservoir à carburant en matière thermoplastique destiné à un véhicule automobile.

10. Procédé pour fabriquer une tubulure ou un embout conforme à une quelconque des revendications précédentes selon la technique de coextrusion-soufflage, comprenant une étape d'extrusion d'une paraison multicouche, une étape de préformage de la paraison et une étape de moulage de cette paraison, selon lequel on opère en semi-continu avec au moins un poste de moulage et on effectue les opérations suivantes :
a) dans l'étape d'extrusion, qui est continue, on forme un tube en matière thermoplastique multicouche que l'on pince et on sectionne de manière à former des paraisons que l'on dépose en continu sur une bande transporteuse ;
b) dans l'étape de préformage, on accompagne le dépôt de chaque paraison sur la bande transporteuse d'une opération de préformage transversal au moyen d'un outil ;
c) on déplace la paraison préformée dans un poste de moulage au-dessus d'une partie de moule ouvert et on y dépose la paraison ;
d) on ferme le moule et on souffle la paraison ;
e) on ouvre le moule et on éjecte le corps creux formé.

## Claims

1. Thermoplastic multilayer fuel tank pipe or nozzle guide which is obtained by blow molding and comprises an inner layer, which is in direct contact with the fuel, comprising a conductive compound based on a virgin polymer selected from polyolefins and polyamides, an outer layer comprising a virgin polymer selected from polyolefins and polyamides, at least one barrier layer, at least one adhesive and at least one layer comprising recycled plastic, the conductive compound comprising a conductive additive in an amount of at least 5% in weight of the conductive compound and the electrical surface resistivity of the internal conductive layer being at most of 10⁶ Ohm/square.

2. Pipe or nozzle according to the preceding claim, **characterized in that** the outer layer comprises a conductive compound.

3. Pipe or nozzle according to Claim 1 or 2, **characterized in that** the layers lying on each side of a barrier layer comprise at least one adhesive.

4. Pipe or nozzle according to any one of the preceding claims, **characterized in that** at least one layer comprising recycled plastic lies between the barrier layer and the inner layer.

5. Pipe or nozzle according to any one of Claims 1 to 3, **characterized in that** at least one layer comprising recycled plastic lies between the barrier layer and the outer layer.

6. Pipe or nozzle according to any one of Claims 1 to 4, **characterized in that** it consists of four layers arranged in the following order:
a) an inner layer comprising a conductive compound based on a virgin polyolefin;
b) a layer comprising recycled plastic and at least one adhesive;
c) a layer which is a barrier to hydrocarbons;
d) an outer layer based on a virgin polyolefin comprising at least one adhesive.

7. Pipe or nozzle according to any one of Claims 1 to 5, **characterized in that** it comprises a layer based on a non-conductive polyolefin contiguous with an inner layer comprising a compound based on a conductive polyolefin.

8. Pipe or nozzle according to any one of Claims 1 to 3, 5 or 7, **characterized in that** it consists of seven layers arranged in the following order:
a) an inner layer comprising a conductive compound based on a virgin polyolefin;
b) a layer based on a virgin polyolefin;
c) layer comprising at least one adhesive;
d) a layer which is a barrier to hydrocarbons;
e) a layer comprising at least one adhesive;
f) a layer comprising recycled plastic;
g) an outer layer based on a virgin polyolefin.

9. Pipe or nozzle according to any one of the preceding claims, **characterized in that** it constitutes a filling pipe for a thermoplastic fuel tank intended for a motor vehicle.

10. Process for manufacturing a pipe or nozzle according to any one of the preceding claims using the technique of coextrusion blow moulding, comprising a step of extruding a multilayer parison, a step of preforming the parison and a step of moulding this parison, which process is carried out semi-continuously with at least one moulding station and the following operations are carried out:
a) in the extrusion step, which is continuous, a multilayer thermoplastic tube is formed, which is pinched off and cut so as to form parisons which are continuously deposited on a conveyor belt;
b) in the preforming step, the deposition of each parison on the conveyor belt is accompanied by a transverse preforming operation by means of a tool;
c) the preformed parison is moved into a moulding station above an open mould part and the parison is deposited therein;
d) the mould is closed and the parison is blow-moulded;
e) the mould is opened and the hollow body formed is ejected.

## Patentansprüche

1. Mehrschichtiger Einfüllstutzen oder Ansatzstück für einen Treibstofftank aus thermoplastischem Material, der mittels Blasformen erhalten wird und eine innere Schicht, die im direkten Kontakt mit dem Treibstoff steht und eine leitfähige Verbindung basierend auf einem jungfräulichen, aus den Polyolefinen und den Polyamiden ausgewählten Polymer umfasst, eine äußere Schicht, die ein jungfräuliches, aus den Polyolefinen und den Polyamiden ausgewähltes Polymer umfasst, mindestens eine Sperrschicht, mindestens einen Klebstoff und mindestens eine recyceltes Kunststoffmaterial umfassende Schicht umfasst, wobei die leitfähige Verbindung mindestens 5 Gew.-% eines leitfähigen Additivs bezogen auf die leitfähige Verbindung enthält und der elektrische Widerstand der Oberfläche der inneren, leitfähigen Schicht höchstens 10⁶ Ohm/Quadrat beträgt.

2. Stutzen oder Ansatzstück nach dem vorhergehenden Anspruch, **dadurch gekennzeichnet, dass** die äußere Schicht eine leitfähige Verbindung umfasst.

3. Stutzen oder Ansatzstück nach Anspruch 1 oder 2, **dadurch gekennzeichnet, dass** die sich auf beiden Seiten einer Sperrschicht befindenden Schichten mindestens einen Klebstoff umfassen.

4. Stutzen oder Ansatzstück nach einem der vorhergehenden Ansprüche, **dadurch gekennzeichnet, dass** sich zwischen der Sperrschicht und der inneren Schicht mindestens eine recyceltes Kunststoffmaterial umfassende Schicht befindet.

5. Stutzen oder Ansatzstück nach einem der vorhergehenden Ansprüche 1 bis 3, **dadurch gekennzeichnet, dass** sich zwischen der Sperrschicht und der äußeren Schicht mindestens eine recyceltes Kunststoffmaterial umfassende Schicht befindet.

6. Stutzen oder Ansatzstück nach einem der vorhergehenden Ansprüche 1 bis 4, **dadurch gekennzeichnet, dass** er/es aus 4 Schichten besteht, die folgendermaßen angeordnet sind:
a) eine innere, eine leitfähige Verbindung basierend auf einem jungfräulichen Polyolefin umfassende Schicht,
b) eine recyceltes Kunststoffmaterial und mindestens einen Klebstoff umfassende Schicht,
c) eine Sperrschicht für Kohlenwasserstoffe,
d) eine äußere, auf jungfräulichem Polyolefin basierende Schicht, die mindestens einen Klebstoff umfasst.

7. Stutzen oder Ansatzstück nach einem der vorhergehenden Ansprüche 1 bis 5, **dadurch gekennzeichnet, dass** er/es eine auf nicht leitfähigem Polyolefin basierende Schicht umfasst, die an eine innere Schicht angrenzt, die eine Verbindung basierend auf einem leitfähigen Polyolefin umfasst.

8. Stutzen oder Ansatzstück nach einem der vorhergehenden Ansprüche 1 bis 3, 5 oder 7, **dadurch gekennzeichnet, dass** er/es aus 7 Schichten besteht, die folgendermaßen angeordnet sind:
a) eine innere, eine leitfähige Verbindung basierend auf einem jungfräulichen Polyolefin umfassende Schicht,
b) eine auf jungfräulichem Polyolefin basierende Schicht,
c) eine mindestens einen Klebstoff umfassende Schicht,
d) eine Sperrschicht für Kohlenwasserstoffe,
e) eine mindestens einen Klebstoff umfassende Schicht,
f) eine recyceltes Kunststoffmaterial umfassende Schicht,
g) eine äußere Schicht basierend auf jungfräulichem Polyolefin.

9. Stutzen oder Ansatzstück nach einem der vorhergehenden Ansprüche, **dadurch gekennzeichnet, dass** er/es aus einem Einfüllstutzen für einen Treibstofftank aus thermoplastischem Material besteht, der für ein Kraftfahrzeug bestimmt ist.

10. Verfahren zur Herstellung eines Stutzens oder eines Ansatzstückes nach einem der vorhergehenden Ansprüchen gemäß eines Coextrusions-Blasformverfahrens, umfassend einen Extrusionsschritt eines mehrschichtigen Blasrohlings, einen Vorformungsschritt des Blasrohlings und einen Formungsschritt dieses Blasrohlings, wobei mit mindestens einer Formstation halbkontinuierlich gearbeitet wird und wobei die folgenden Arbeitsschritte ausgeführt werden:
a) im Extrusionsschritt, der kontinuierlich durchgeführt wird, wird ein Schlauch aus mehrschichtigem, thermoplastischem Material gebildet, der abgekniffen und unterteilt wird, um die Blasrohlinge zu formen, die kontinuierlich auf ein Transportband abgelegt werden;
b) im Vorbildungsschritt wird das Auflegen von jedem Blasrohling auf das Transportband von einem Schritt der seitlichen Vorformung mittels eines Geräts begleitet;
c) der vorgeformte Blasrohling wird in eine Formstation auf einen Teil der offenen Form gesetzt und dort wird der Blasrohling abgelegt;
d) die Form wird geschlossen und der Blasrohling wird blasgeformt;
e) die Form wird geöffnet und der gebildete Hohlkörper wird ausgeworfen.
